# FASCICULE DE BREVET EUROPEEN

(11) **EP 2 038 139 B1**
(45) Date de publication et mention de la délivrance du brevet: **19.02.2014**
(21) Numéro de dépôt: 07803786.8
(22) Date de dépôt: 27.06.2007
(51) Int. Cl.: B60M 3/00

(54) **PERFECTIONNEMENT A UN SYSTEME D'ALIMENTATION EN ENERGIE ELECTRIQUE A TRES BASSE TENSION POUR VEHICULE A TRACTION ELECTRIQUE A STOCKAGE D'ENERGIE EMBARQUE**
VERBESSERUNG EINES SYSTEMS FÜR DIE ZUFUHR VON KLEINSPANNUNGSENERGIE FÜR EIN ELEKTROFAHRZEUG MIT BORDEIGENER EINERGIESPEICHERUNG
REFINEMENT OF A SYSTEM FOR SUPPLYING VERY LOW VOLTAGE ENERGY FOR AN ELECTRICAL TRACTION VEHICLE COMPRISING AN ONBOARD STORE OF ENERGY

(30) Priorité: 27.06.2006 FR 0605793
(43) Date de publication de la demande: 25.03.2009
(73) Titulaire: Afriat, Hervé, 75014 Paris (FR)
(72) Inventeur: Afriat, Hervé, 75014 Paris (FR)
(86) Numéro de dépôt international: PCT/FR2007/001077
(87) Numéro de publication internationale: WO 2008/000953

(56) Documents cités:
- EP-A- 1 619 069
- WO-A1-2005/082666
- FR-A- 2 825 666

## Description

L'invention concerne un perfectionnement à un système d'alimentation en énergie électrique à très basse tension pour véhicule à traction électrique à stockage d'énergie embarqué conforme à la demande de brevet WO 2005/082666.

Au rythme actuel, dans les années à venir il y aura plus de 800 métropoles de plus d'un million d'habitants dans le monde qui devront faire face aux engorgements de la circulation en développant leurs transports en commun pour assurer la desserte des populations en intégrant les enjeux du développement durable et de préservation de l'environnement.

Dans ce contexte, les métros lourds ou légers, les tramways, les trolleybus, figurent en bonne place pour assurer les dessertes des populations.

Les véhicules électriques à rames, tels que les métros ou les tramways nécessitent des infrastructures électriques de forte puissance pour assurer l'alimentation desdits véhicules.

Traditionnellement leur infrastructure électrique comprend un poste de transformation qui transforme la haute tension ou la moyenne tension prise sur le réseau électrique général en une basse tension de quelques centaines de volts. Cette dernière passe dans un poste de redressement qui transforme ladite basse tension alternative en une tension continue pour l'alimentation des véhicules à rames. Typiquement cette tension est de 600 volts continu pour les métros américains et japonais et de 750 volts continu pour les métros et tramways européens.

Les postes de transformation sont d'une puissance de l'ordre du méga Watt et sont espacés en général de 2 à 3 kilomètres.

Ces postes de transformation sont encombrants, coûteux et nécessitent de substantiels travaux de génie civil. Il serait donc intéressant de pouvoir les supprimer d'autant plus qu'ils sont toujours relativement délicats à intégrer en raison du manque de place dans les gares notamment.

Par ailleurs dans l'exploitation dés lignes de métros, on note des dysfonctionnements de plus en plus nombreux en raison notamment de la présence de plus en plus fréquente de personnes non autorisées sur les voies qui amènent les exploitants à devoir installer des portes palières sur les quais. En effet, si une personne non autorisée est repérée sur une voie, une procédure de sécurité est enclenchée. Celle-ci prévoit notamment la coupure de l'alimentation électrique sur le tronçon concerné, c'est-à-dire sur environ 2 à 3 kilomètres de ligne, ce qui perturbe sensiblement l'exploitation de la ligne.

Il serait donc intéressant de réduire la portion de tronçon à une portion équivalente à une inter-station voire une demi inter-station pour limiter au maximum la longueur de ligne concernée par la perturbation ce qui n'est pas possible avec le système actuel. Par ailleurs, il serait intéressant de permettre de continuer l'exploitation de la ligne en mode dégradé (à petite vitesse) ce qui minimiserait l'impact sur l'exploitation.

On rappelle ci-après le cadre de la dénomination des tensions utilisées :
On entend par très basse tension, une tension de quelques dizaines de volts,
On entend par basse tension, une tension de quelques centaines de volts,
On entend par moyenne tension, une tension de quelques milliers de volts,
On entend par haute tension, une tension de quelques dizaines de milliers de volts.

Le but de la présente invention est de simplifier sensiblement l'infrastructure d'alimentation électrique des véhicules électriques à rames tels que les métros, les tramways, les trolleybus notamment en y supprimant les postes de transformation des niveaux de tensions électriques (postes de redressement) permettant ainsi de limiter les encombrements et de réduire les coûts de telles infrastructures.

La présente invention vise aussi à porter la longueur des tronçons d'alimentation de quelques kilomètres à quelques centaines de mètres (environ une demi distance inter-station) pour réduire sensiblement, en cas d'incident les contraintes sur l'exploitation.

On connaît en outre par la demande de brevet WO 2005/082666 un système d'alimentation en énergie électrique à très basse tension pour au moins un véhicule à traction électrique circulant sur une voie et comprenant :
- des roues reliées au dit véhicule et roulant sur ladite voie, et
- au moins une chaîne de traction dudit véhicule agissant sur les roues et comprenant de façon connue en soi au moins un moteur électrique et sa commande,
- au moins un moyen d'alimentation électrique à très basse tension installé à proximité immédiate de la voie,
- deux rails d'alimentation électrique ou éléments d'alimentation électrique analogues, parallèles entre eux, contigus ou distants, dont un premier est relié à une borne dudit moyen d'alimentation électrique et le deuxième est relié à une autre borne dudit moyen d'alimentation électrique,
- au moins un premier moyen collecteur d'énergie électrique embarqué dans le véhicule et placé en contact mobile avec ledit premier rail,
- au moins un second moyen collecteur d'énergie électrique également embarqué dans le véhicule et placé en contact mobile avec ledit second rail,
- au moins un moyen de stockage d'énergie électrique embarqué dans le véhicule, le système comportant en outre au moins un moyen d'alimentation électrique embarqué qui est relié aux dits moyens collecteurs d'énergie électrique, et qui est connecté d'une part audit moyen de stockage et d'autre part à ladite chaîne de traction, et qui pilote la distribution d'énergie du moyen de stockage à la chaîne de traction et notamment la recharge du moyen de stockage et sa décharge sélective pour alimenter la chaîne de traction en fonction de la demande d'énergie et des séquences de roulement du véhicule.

Dans un tel système, ledit moyen d'alimentation électrique à très basse tension alimente ledit moyen d'alimentation électrique embarqué, celui-ci alimentant à son tour ledit moyen de stockage afin qu'il emmagasine de l'énergie électrique, jusqu'à concurrence de sa capacité, dans les phases successives suivantes :
a- pendant la phase de course sur l'erre sur du plat où la puissance demandée par la chaîne de traction est modeste voire nulle,
b- pendant la phase de freinage où il y en outre une récupération d'énergie électrique à partir de la chaîne de traction,
c- et pendant la phase d'arrêt où la puissance demandée par la chaîne de traction est nulle,

Ledit moyen d'alimentation électrique embarqué utilisant en plus de l'énergie prélevée sur le moyen d'alimentation à très basse tension l'énergie électrique qui a été emmagasinée lors desdites phases (a,b,c) dans ledit moyen de stockage pour alimenter la chaîne de traction pendant la phase de démarrage ou lors d'une pente à monter où la puissance demandée par la chaîne de traction est relativement importante, ou dans une erre hors alimentation, et l'énergie du moyen d'alimentation très basse tension, dans les autres phases de déplacement.

L'invention vise un perfectionnement relatif plus particulièrement audit moyen d'alimentation du système d'alimentation de cette demande.

La présente invention vise aussi à simplifier sensiblement la réalisation du moyen d'alimentation embarqué de la demande de brevet WO 2005/082666 précitée et à améliorer le rendement énergétique du système.

Il est en effet proposé selon l'invention, un système d'alimentation électrique d'au moins un véhicule électrique circulant sur une voie et comprenant :
- des roues reliées au dit véhicule et roulant sur ladite voie, et
- au moins une chaîne de traction dudit véhicule agissant sur les roues et comprenant de façon connue en soi au moins un moteur électrique et sa commande,
- au moins un moyen d'alimentation électrique,
- deux rails d'alimentation électrique ou éléments d'alimentation électrique analogues, parallèles entre eux, contigus ou distants, dont un premier est relié à une borne dudit moyen d'alimentation électrique et le deuxième est relié à une autre borne dudit moyen d'alimentation électrique,
- au moins un premier moyen collecteur d'énergie électrique embarqué dans le véhicule et placé en contact mobile avec ledit premier rail,
- au moins un second moyen collecteur d'énergie électrique également embarqué dans le véhicule et placé en contact mobile avec ledit second rail,
- au moins un moyen de stockage d'énergie électrique embarqué dans le véhicule, le système comportant en outre au moins un moyen d'alimentation électrique embarqué qui est relié aux dits moyens collecteurs d'énergie électrique, et qui est connecté d'une part audit moyen de stockage et d'autre part à ladite chaîne de traction, et qui pilote la distribution d'énergie du moyen de stockage à la chaîne de traction et notamment la recharge du moyen de stockage et sa décharge sélective pour alimenter la chaîne de traction en fonction de la demande d'énergie et des séquences de roulement du véhicule, le système d'alimentation étant caractérisé en ce que ledit moyen d'alimentation électrique comporte un réseau électrique domestique attenant, lequel est par exemple le réseau électrique domestique monophasé 240 volts alternatif ou le réseau électrique domestique triphasé 400 volts alternatif.

Le système d'alimentation comporte des sections de la voie relativement courtes, comprenant par exemple de simples sectionneurs ou commutateurs électriques en position sur lesdites sections de la voie, en vue d'isoler lesdites sections l'une de l'autre.

Il résulte de cette disposition que ledit moyen d'alimentation électrique peut être constitué par le réseau électrique domestique attenant monophasé 240 volts ou triphasé 400 volts, le courant alternatif prélevé pouvant être redressé en aval au sein du moyen d'alimentation électrique embarqué, et le traitement au sein de ce dernier ne nécessite pas de moyen de transformation du niveau de la tension, laquelle peut être celle du réseau, par exemple sensiblement à 240 volts ou 400 volts, ce qui permet d'éliminer les équipements de transformateurs qui sont les plus encombrants et les plus lourds, dans le traitement du courant. Ainsi, relativement au système d'alimentation à très basse tension selon la demande précitée, l'utilisation d'une basse ou moyenne tension d'un réseau électrique attenant permet de réduire notablement l'équipement du système, tant au niveau du moyen d'alimentation électrique (pas de poste transformateur en très basse tension) que du moyen d'alimentation électrique embarqué, ou le convertisseur de tête peut être simplifié voir supprimé et remplacé, par exemple, par un simple pont redresseur.

Le système de l'invention tire ainsi parti du maillage important du réseau domestique qui existe en zone urbaine pour alimenter directement les rames sans l'utilisation de postes de transformation des tensions, postes encombrants et coûteux. Un poste de transformation conventionnel d'une puissance de 1 MW qui délivre 750 volts est avantageusement remplacé par une prise directe sur le réseau domestique de 250KW par exemple délivrant 400 volts triphasé et peut néanmoins alimenter des métros lourds ou légers ou des tramways, ou des trolleybus grâce à l'association avec le système décrit dans la demande de brevet WO 2005/082666.

De plus, relativement au courant continu du moyen d'alimentation tel que prélevé dans le moyen d'alimentation électrique du système d'alimentation de la demande de brevet précitée, l'utilisation d'un courant alternatif permet de sectionner beaucoup plus facilement des tronçons d'alimentation de la voie sans avoir à maîtriser par des équipements les coupures du courant continu, génératrices d'arc électrique, et donc de constituer des tronçons d'alimentation de plus petite longueur (par exemple d'une demi station pour un véhicule à rame) relativement à des tronçons pourvus de postes de redressement traditionnels en courant continu, rapportés, lourds et nécessairement espacés l'un de l'autre de plusieurs stations. Selon l'invention, on peut utiliser de simples sectionneurs de commutation sur le réseau.

Ladite isolation en tronçons de la voie permet de façon avantageuse de sectionner un tronçon, par exemple sur une demi station, en cas d'anomalie sur ce tronçon (ou accident), et de maintenir l'exploitation sur le reste de la voie. Ceci augmente le rendement de l'exploitation de la voie et rend plus souple la remise en tension du tronçon sectionné après rétablissement de ladite anomalie.

En outre, il faut souligner que le système selon l'invention permet une meilleure récupération d'énergie, de 40 à 60% quelles que soient les conditions de fonctionnement au lieu d'une récupération d'énergie de 0% à 5% aux heures creuses et de 25% à 30% aux heures de pointe, pour les métros et tramways conventionnels, ce qui réduit d'autant l'élévation de température par effet joule dans les tunnels, permet des économies d'énergie supplémentaires et va dans le sens du développement durable.

De plus, avec le prélèvement d'un courant alternatif basse ou très basse tension, le moyen d'alimentation électrique embarqué comporte à la différence du système selon la demande précitée un premier convertisseur de tension électrique du type alternatif/continu permettant de redresser la tension alternative du courant prélevé par les collecteurs à une tension de traitement continue, au niveau d'un bus d'alimentation commun et les autres équipements peuvent demeurer identiques ou similaires.

Le courant du réseau électrique domestique attenant peut également alimenter les rails d'alimentation du véhicule électrique sous forme continue en basse ou très basse tension, étant alors redressé par des équipements de redressement légers connectés aux dites sections de la voie. Dans ce cas, les sectionneurs peuvent être disposés en amont desdits postes de redressement pour permettre un sectionnement en courant alternatif.

Dans le cas d'une alimentation 400 volts prise sur le réseau domestique attenant puis redressée, la commutation des segments ou tronçons peut se faire en coupant tout d'abord le 400 volts alternatif du réseau domestique puis en commutant les tronçons de voie à piloter avant de réenclencher le 400 volts alternatif.

Dans ce cas également, le premier convertisseur de tension électrique du moyen d'alimentation électrique embarqué est de type courant continu/courant continu ou peut être éliminé ou encore remplacé avantageusement par un simple élément redresseur de courant.

Enfin, lesdits rails d'alimentation électrique du véhicule peuvent comporter des segments conducteurs électriques alimentés sur le parcours du véhicule électrique, ou être remplacés par des caténaires ou des plots conducteurs électriques d'alimentation électrique du véhicule ou de doubles lignes aériennes.

L'invention est illustrée ci-après à l'aide d'exemples de réalisation et en référence aux dessins annexés sur lesquels :
- La figure 1 est un schéma illustrant un moyen d'alimentation électrique du système d'alimentation électrique selon l'invention, constitué par un réseau électrique domestique à courant alternatif monophasé 240 volts,
- La figure 2 est un schéma illustrant un moyen d'alimentation électrique du système d'alimentation électrique selon l'invention, constitué par un réseau électrique domestique à courant triphasé 400 volts par un troisième rail sur la partie droite de la figure, un réseau d'alimentation électrique par des caténaires sur la partie médiane de la figure, et un réseau d'alimentation par des plots conducteurs électriques sur la voie sur la partie gauche de la figure, et
- La figure 3 représente un schéma du circuit électrique du moyen d'alimentation électrique embarqué du système d'alimentation électrique selon l'invention, pour l'utilisation du réseau électrique selon les figures 1 et 2.

La présente invention se rapporte à un perfectionnement de la demande de brevet WO 2005/082666, quant aux moyens d'alimentation électrique et aux moyens d'alimentation embarqués du système d'alimentation électrique décrit. On se reportera à cette demande de brevet pour comprendre l'invention et les éléments communs ou similaires sont désignés par les mêmes références numériques accompagnées de l'indice et ne seront pas décrits.

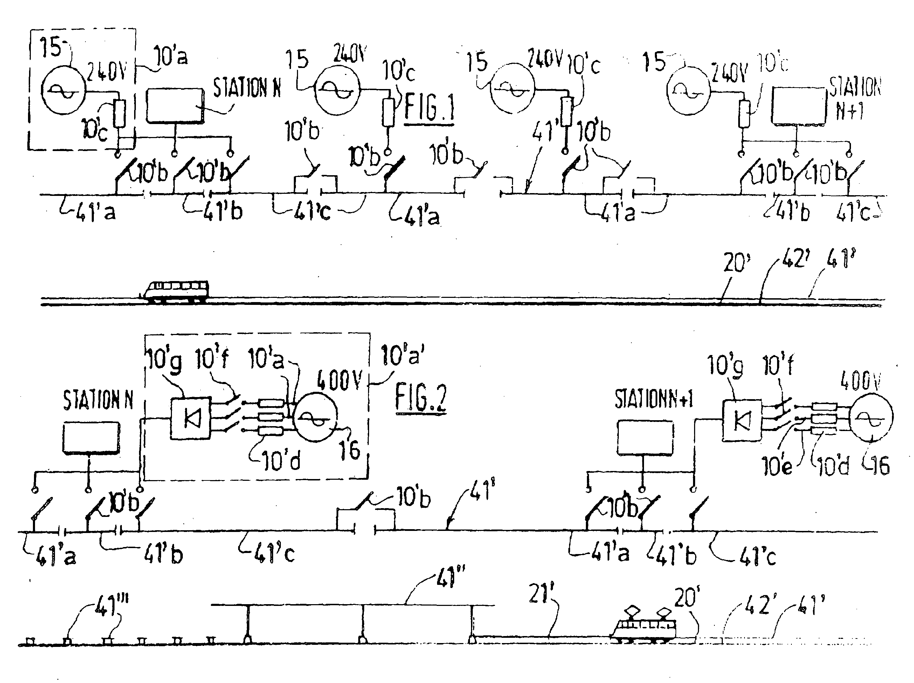

Dans la figure 1 on a décrit une variante du système d'alimentation adaptée à un véhicule électrique à rame, selon laquelle l'un des rails d'alimentation, le rail de masse, est électriquement confondu avec au moins un des rails de roulement ou de guidage tandis que l'autre rail d'alimentation 41' est électriquement distinct des rails de roulement 42'. Cette configuration est dite à troisième rail.

Les rails de roulement ou de guidage 42' occupent la partie centrale de la voie de roulement 20' du véhicule électrique à rame et le rail d'alimentation 41' est disposé sur le côté de la voie, le long du véhicule. L'alimentation du véhicule, plus précisément du moyen d'alimentation électrique embarqué 80' est réalisée par un collecteur (non représenté) frottant contre lesdits rails d'alimentation 41' et 42'.

On a représenté à la figure 1 le seuil de la station N de montée descente des passages portant le drapeau station N, et le seuil de la station successive suivante N + 1 de montée descente des passagers portant le drapeau N + 1. On voit que le rail d'alimentation 41' comporte entre lesdites stations N et N + 1 plusieurs tronçons égaux 41'a, 41'c indépendants, correspondant sensiblement à la moitié de la distance entre lesdits deux seuils de station, et deux petits tronçons 41'b en regard de chacun des seuils de ces stations. Ces tronçons 41'a, 41'b et 41'c sont raccordés au réseau électrique domestique attenant monophasé 240 volts 15, chacun au moyen d'un sectionneur ou commutateur 10'b qu'on peut fermer pour alimenter le tronçon de rail correspondant ou ouvrir en cas d'anomalie ou accident sur ledit tronçon de rail afin d'interrompre l'alimentation du véhicule sur ce tronçon. Cette disposition de la voie à tronçons découpés permet de tirer partie du maillage électrique serré qui existe en milieu urbain. Cette disposition permet aussi d'isoler un tronçon plus court comportant une anomalie de fonctionnement.

Un fusible de surintensité 10'c peut être disposé en amont des dits sectionneurs 10'b.

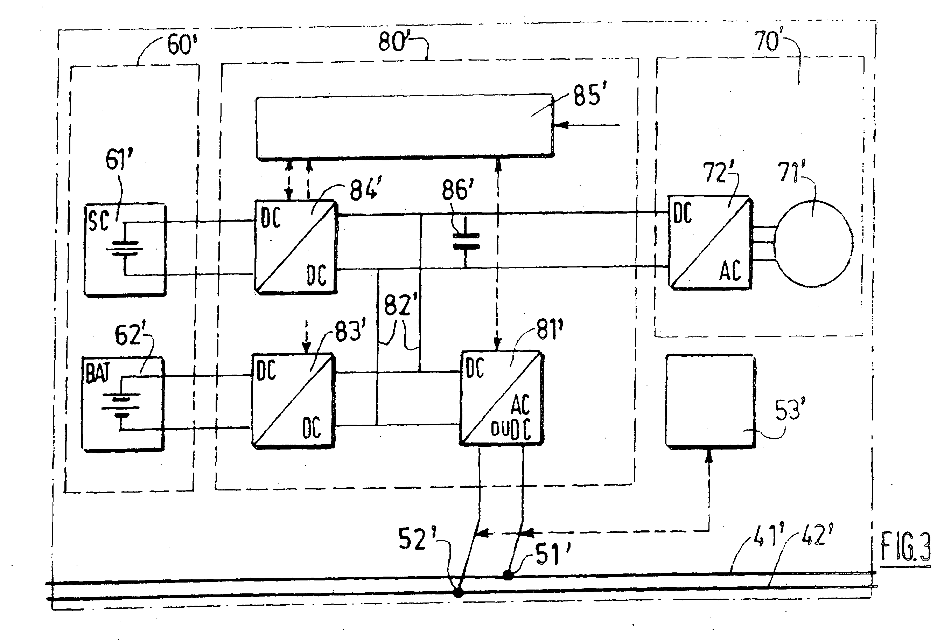

Le rail d'alimentation 41' du véhicule est donc alimenté en courant monophasé 240 volts alternatif et non plus en courant continu très basse tension comme dans le système décrit dans la demande de brevet précité. Ce rail d'alimentation 41' alimente le moyen d'alimentation embarqué 80' du véhicule en utilisant dans son circuit électrique (figure 3) les mêmes composants que dans le circuit du système de la demande précitée, à l'exception du premier convertisseur 81' qui est à présent un convertisseur à courant alternatif d'entrée 240 volts/courant continu de sortie. La tension de sortie peut être, par exemple, à la même tension ou à 400 volts réalisée dans une élévation de tension dans un rapport faible et donc avec une réalisation simplifiée.

Il est à noter que les sectionneurs 10'b des tronçons peuvent être pilotés de façon automatique à distance sans problème de coupure du courant, en raison, de l'utilisation du courant alternatif.

La figure 2 illustre sur la partie droite le moyen d'alimentation électrique 10' du système d'alimentation électrique de l'invention selon une variante de réalisation par laquelle le réseau électrique monophasé 240 volts alternatif est remplacé par un réseau électrique domestique attenant triphasé 400 volts alternatif 16, avec une alimentation par troisième rail sur la droite de la figure, une alimentation par caténaires sur la partie médiane et par des plots sur la partie gauche de la figure.

Ce moyen 10'a' est raccordé au rail d'alimentation électrique 41' tout d'abord par une section à fusibles de surintensité 10'd dont chacun protège une des lignes de phase du réseau, et successivement par une section commutateurs ou sectionneurs 10'f permettant d'ouvrir ou fermer lesdites lignes de phases 10'e, un redresseur 10'g du courant triphasé 400 volts alternatifs (soit 600 volts continu environ), et une section commutateurs ou sectionneurs 10'b des tronçons 41'a, 41'b, 41'c du rail d'alimentation 41', permettant comme précédemment de transmettre ou couper le courant à des tronçons du rail d'alimentation.

Le rail d'alimentation 41' est à présent alimenté en courant continu à 600 volts continu environ et le premier convertisseur 81' du circuit du moyen d'alimentation embarqué 80' (figure 3) peut, par exemple, être supprimé ou remplacé par un simple commutateur ou un pont redresseur d'isolation électrique du véhicule.

Ce qui précède montre les avantages du perfectionnement selon l'invention permettant d'une part de supprimer les postes de redressement traditionnels d'environ 1MW, généralement disposés tous les 2 kilomètres l'un de l'autre et servant à alimenter le troisième rail ou la caténaire en 750 volts continu et d'autre part de simplifier sensiblement le moyen d'alimentation embarqué 80'.

Le système de transport de type métro, tramway, trolleybus,...selon l'invention vient s'alimenter en 600 Volts continu par redressement du 400 volts triphasé pris directement sur le réseau domestique attenant avec une puissance d'alimentation sensiblement plus faible, par exemple de 150KW au lieu de 1 MW, pour une puissance de traction identique par exemple de 600KW au niveau des motrices. Le complément de puissance est fourni par le moyen de stockage d'énergie embarqué dans ledit véhicule qui se recharge pendant les différentes phases (a,b,c) déjà mentionnées et relativement au système d'alimentation en très basse tension décrit précédemment.

En outre l'exploitation du véhicule par des tronçons de rail d'alimentation courts est d'une meilleure efficacité.

Le système d'alimentation selon l'invention peut encore être couplé avec le système d'alimentation en très basse tension, sur des tronçons, où la sécurité électrique des personnes est absolument requise, ou en mode dégradé, par exemple pour le fonctionnement du véhicule électrique, même en cas d'anomalie sur un tronçon, sans risque pour les personnes. Le couplage est réalisé par commutation du moyen d'alimentation basse tension sur le moyen d'alimentation très basse tension et par la commutation du premier convertisseur du moyen d'alimentation embarqué utilisé en basse tension à celui du moyen d'alimentation embarqué utilisé en très basse tension.

Les rails d'alimentation électrique peuvent comporter des segments conducteurs électriques alimentés sur le parcours du véhicule électrique.

Le système d'alimentation peut éventuellement comporter en remplacement des rails d'alimentation des caténaires aériens ou des lignes aériennes 41" d'alimentation du véhicule électrique par exemple de type tramway (voir la partie médiane de la figure 2). En centre ville où l'implantation des caténaires est gênante, les caténaires peuvent être remplacées par des plots conducteurs électriques 41 "' d'alimentation du véhicule (voir la partie gauche de la figure 2) venant en contact avec un plan conducteur inférieur électrique du véhicule (non représenté), au passage de celui-ci, ces plots pouvant être espacés l'un de l'autre d'une longueur inférieure à celle du plan conducteur pour la continuité de l'alimentation électrique au passage du véhicule électrique d'un plot à l'autre, ou d'une longueur supérieure puisque le véhicule comporte un moyen de stockage de l'énergie qui lui confère par construction une autonomie. Le système d'alimentation par caténaires peut aussi par exemple être remplacé en centre ville par des segments conducteurs électriques au sol (non représenté). L'alimentation du véhicule est réalisée par exemple par un patin collecteur de courant qui vient en contact avec un desdits segments conducteurs, la distance entre les segments conducteurs pouvant être de longueur variable en raison du dispositif de stockage d'énergie embarqué dans le véhicule.

Si l'on souhaite alimenter le système de transport avec une tension habituelle, par exemple 750 volts continu, on introduira un moyen de transformation élévateur de puissance réduite relié au réseau domestique. Le gain restera appréciable puisque par exemple pour une même puissance de traction, par exemple de 800KW les postes de redressement de 1MW/750VCC auront été remplacés par des postes de 200KW/750 VCC en conservant de plus la compatibilité des tensions. La puissance du moyen de transformation des tensions est adaptée par exemple selon la puissance moyenne nécessaire au véhicule.

Par ailleurs, le système d'alimentation pourrait être alimenté selon l'invention à des tensions traditionnelles de fonctionnement de véhicules électriques, par exemple 600 ou 750 volts continus, par de petits transformateurs de tensions reliés sur des tronçons cours de parcours du véhicule électrique au réseau électrique domestique.

## Revendications

1. Système d'alimentation électrique d'au moins un véhicule électrique et notamment un véhicule à rame électrique circulant sur une voie (20') et comprenant :
- des roues reliées au dit véhicule et roulant sur ladite voie (20'), et
- au moins une chaîne de traction (70') dudit véhicule agissant sur les roues et comprenant de façon connue en soi au moins un moteur électrique et sa commande,
- au moins un moyen d'alimentation électrique (10'a,10'a'),
- deux rails d'alimentation électrique ou éléments d'alimentation électrique analogues (41',42'), parallèles entre eux, contigus ou distants, dont un premier est relié à une borne dudit moyen d'alimentation électrique (10'a,10'a') et le deuxième est relié à une autre borne dudit moyen d'alimentation électrique (10'a,10'a'),
- au moins un premier moyen collecteur d'énergie électrique (51') embarqué dans le véhicule et placé en contact mobile avec ledit premier rail (41'),
- au moins un second moyen collecteur d'énergie électrique (52') également embarqué dans le véhicule et placé en contact mobile avec ledit second rail (42'),
- au moins un moyen de stockage d'énergie électrique embarqué (60') dans le véhicule,
le système comportant en outre au moins un moyen d'alimentation électrique embarqué (80') qui est relié aux dits moyens collecteurs d'énergie électrique, et qui est connecté d'une part audit moyen de stockage (60') et d'autre part à ladite chaîne de traction (70'), et qui pilote la distribution d'énergie du moyen de stockage (60') à la chaîne de traction (70') et notamment la recharge du moyen de stockage (60') et sa décharge sélective pour alimenter la chaîne de traction (70') en fonction de la demande d'énergie et des séquences de roulement du véhicule, le système d'alimentation étant **caractérisé en ce que** ledit moyen d'alimentation électrique (10'a,10'a) comporte un réseau électrique domestique attenant, lequel est par exemple le réseau électrique domestique monophasé 240 volts alternatif (15) ou le réseau électrique domestique triphasé 400 volts alternatif (16).

2. Système d'alimentation selon la revendication 1, **caractérisé en ce qu'**il comporte des sections de rail d'alimentation (41'a,41'b,41'c) relativement courtes comprenant par exemple de simples sectionneurs ou commutateurs électriques (10'b) en position sur lesdites sections de voie (41'a,41'b,41'c), en vue d'isoler lesdites sections l'une de l'autre.

3. Système d'alimentation selon l'une des revendications 1 ou 2, **caractérisé en ce que** ledit moyen d'alimentation électrique (10'a,10'a') est raccordé à des tronçons (41'a,41'b,41'c) de rail d'alimentation du véhicule dont la longueur est au plus la demi-distance entre deux stations successives (N,N+1) de desserte des passagers.

4. Système d'alimentation selon l'une des revendications 1 à 3, **caractérisé en ce que** ledit moyen d'alimentation électrique (10'a,10'a') comporte un redresseur (10'g) du courant.

5. Système d'alimentation selon la revendication 1, **caractérisé en ce qu'**il comporte un moyen de transformation des tensions de puissance réduite relié au réseau domestique.

6. Système d'alimentation selon la revendication 5, **caractérisé en ce que** ledit moyen de transformation de tensions est dimensionné selon la puissance moyenne nécessaire au véhicule électrique.

7. Système d'alimentation selon l'une des revendications 1 à 4, **caractérisé en ce que** ledit premier convertisseur (81') de tension électrique du moyen d'alimentation embarqué (80') est supprimé et remplacé par un moyen redresseur du courant, par exemple un pont redresseur.

8. Système d'alimentation selon la revendication 4, **caractérisé en ce que** ledit premier convertisseur (81') de tension électrique du moyen d'alimentation électrique embarqué (80') est de type courant continu/courant continu.

9. Système d'alimentation selon la revendication 1, **caractérisé en ce que** ledit système d'alimentation embarqué (80') du véhicule comporte un premier convertisseur (81') de tension électrique de type courant alternatif/courant continu.

10. Système d'alimentation selon l'une quelconque des revendications précédentes, **caractérisé en ce que** lesdits rails d'alimentation électrique comportent des segments conducteurs électriques alimentés sur le parcours du véhicule électrique.

11. Système d'alimentation selon l'une des revendications 1 à 9 **caractérisé en ce que** lesdits rails d'alimentation électriques sont remplacés par des lignes aériennes (41") ou des plots conducteurs électrique (41 "') d'alimentation du véhicule.

12. Véhicule électrique ou système de transport électrique, par exemple de type métro, tramway, trolley bus, **caractérisé en ce qu'**il met en oeuvre un système d'alimentation électrique selon l'une des revendications précédentes.

## Patentansprüche

1. Elektrisches Versorgungssystem für mindestens ein elektrisches Fahrzeug, besonders ein auf einem Gleis (20') verkehrendes elektrisches Fahrzeug mit Wagengruppe, bestehend aus:
- mit dem besagten Fahrzeug verbundenen und auf dem besagten Gleis (20') rollenden Rädern, und
- mit mindestens einer Zugkette (70') des besagten Fahrzeugs, die auf die Räder wirkt und in an sich bekannter Weise mindestens einen Elektromotor und den entsprechenden Antrieb aufweist,
- mit mindestens einem elektrischen Versorgungsmittel (10'a,10'a'),
- zwei elektrischen Versorgungsschienen oder vergleichbaren elektrischen Versorgungselementen (41',42'), untereinander parallel, aneinander grenzend oder voneinander entfernt, wobei die erste an eine Anschlussklemme des besagten elektrischen Versorgungsmittels (10'a, 10'a') und die zweite an eine andere Anschlussklemme des besagten elektrischen Versorgungsmittels (10'a, 10'a') angeschlossen ist,
- mindestens einem ersten an Bord des Fahrzeugs befindlichen und in beweglichen Kontakt zur besagten ersten Schiene (41') platzierten Stromkollektormittel (51'),
- mindestens einem zweiten ebenfalls an Bord des Fahrzeugs befindlichen Stromkollektormittel (52'), das mit der besagten zweiten Schiene (42') in beweglichen Kontakt platziert ist
- mindestens einem Stromspeichermittel (60') an Bord des Fahrzeugs, wobei das System außerdem mindestens ein an Bord befindliches Stromversorgungsmittel (80') aufweist, das mit den besagten Stromkollektormitteln verbunden und einerseits an das besagte Speichermittel (60') und andererseits an die besagte Zugkette (70') angeschlossen ist, und das die die Energieverteilung vom Speichermittel (60') an die Zugkette (70') und besonders die Aufladung des Speichermittels (60') und seine selektive Entladung zur Versorgung der Zugkette (70') steuert in Abhängigkeit zur Energieabfrage und den Rollsequenzen des Fahrzeugs, wobei das Versorgungssystem **dadurch gekennzeichnet ist, dass** das besagte Stromversorgungsmittel (10'a, 10'a') ein angrenzendes Hausnetz enthält, beispielsweise das einphasige 240-V Wechselstrom-Hausnetz (15) oder das dreiphasige 400-V Wechselstrom-Hausnetz (16).

2. Versorgungssystem nach Anspruch 1, **dadurch gekennzeichnet, dass** es verhältnismäßig kurze Versorgungsschienenabschnitte enthält (41'a,41'b, 41'c), die beispielsweise einfache elektrische Schalter bzw. Trennschalter aufweisen (10'b), welche an den besagten Gleisabschnitten installiert sind (41'a,41'b,41'c), um die besagten Abschnitte voneinander zu isolieren.

3. Versorgungssystem nach einem der Ansprüche 1 oder 2, **dadurch gekennzeichnet dass** das besagte Stromversorgungsmittel (10'a,10'a') an Abschnitte (41'a, 41'b, 41'c) der Versorgungsschiene des Fahrzeugs angeschlossen ist, deren Länge die Hälfte des Abstands zwischen zwei aufeinander folgenden Passagierbahnhöfen (N,N+1) nicht überschreitet.

4. Versorgungssystem nach einem der Ansprüche 1 bis 3, **dadurch gekennzeichnet, dass** das besagte Stromversorgungsmittel (10'a,10'a') einen Stromgleichrichter (10'g) aufweist.

5. Versorgungssystem nach Anspruch 1, **dadurch gekennzeichnet, dass** es ein Umwandlungsmittel für niedrige Leistungsspannungen aufweist, das an das Hausnetz angeschlossen ist.

6. Versorgungssystem nach Anspruch 5, **dadurch gekennzeichnet, dass** das besagte Spannungsumwandlungsmittel entsprechend der durchschnittlich für das elektrische Fahrzeug erforderlichen Leistung ausgelegt ist.

7. Versorgungssystem nach einem der Ansprüche 1 bis 4, **dadurch gekennzeichnet, dass** der besagte erste elektrische Spannungsumwandler (81') des an Bord befindlichen Versorgungsmittels (80') nicht mehr vorhanden ist und durch ein Stromgleichrichtermittel ersetzt wird, zum Beispiel eine Gleichrichterbrücke.

8. Versorgungssystem nach Anspruch 4, **dadurch gekennzeichnet, dass** der besagte erste elektrische Spannungsumwandler (81') des an Bord befindlichen Stromversorgungsmittels (80') vom Typ Gleichstrom / Gleichstrom ist.

9. Versorgungssystem nach Anspruch 1, **dadurch gekennzeichnet, dass** der erste elektrische Spannungsumwandler (81') des besagten an Bord befindlichen Stromversorgungsmittels (80') vom Typ Wechselstrom / Gleichstrom ist.

10. Versorgungssystem gemäß eines beliebigen der vorstehenden Ansprüche, **dadurch gekennzeichnet, dass** die besagten Stromversorgungsschienen auf der Route des elektrischen Fahrzeugs stromversorgte leitfähige Abschnitte enthalten.

11. Versorgungssystem nach einem der Ansprüche 1 bis 9, **dadurch gekennzeichnet, dass** die besagten Stromversorgungsschienen durch oberirdische Leitungen (41") oder stromleitende Zapfen (41"') zur Versorgung des Fahrzeugs ersetzt werden.

12. Elektrisches Fahrzeug oder elektrisches Transportsystem, beispielsweise vom Typ U-Bahn, Straßenbahn oder Obus, **dadurch gekennzeichnet, dass** es ein Stromversorgungssystem nach einem der vorstehenden Ansprüche benutzt.

## Claims

1. Electrical supply system for at least one electrical vehicle and especially an electric train travelling on a track (20') and including:
- wheels connected to said vehicle and rolling on said track (20'), and
- at least one chain (70') of the said vehicle acting on the wheels and incorporating in a known manner at least one electrical motor and its controls,
- at least means of electricity supply (10'a,10'a'),
- two electricity supply strips or similar electricity supply elements (41',42'), parallel, continuous or apart, the first being connected to a terminal of the said electricity supply (10'a,10'a') and the second connected to another terminal of the said electricity supply (10'a,10'a') with the second one connected to another terminal of the said electricity supply (10'a,10'a'),
- at least a first means of collection of electrical energy (51') installed in the vehicle and in mobile contact with the said first strip (41'),
- at least a second means of collection of electrical energy (52') installed in the vehicle and in mobile contact with the said second strip (42'),
- at least a means of storage of electrical energy installed (60') in the vehicle,
the system in addition including one means of electrical supply installed (80') that is connected to the said means electrical energy collectors, and that is connected on the one hand to the said means of storage (60') and on the other hand to the said chain (70'), and which guides the distribution of energy from the means of storage (60') to the chain (70') and in particular the recharging of the means of storage (60') and selective discharge to supply the train (70') as a function of the demand for energy and the vehicle's rolling sequence, the supply system being characterised since the said means of electrical supply (10'a,10'a') includes an adjacent household electrical circuit, which is for example the single-phase household 240 volts circuit (15) or the three-phase household 400 volt alternating circuit (16).

2. Supply system according to claim 1, **characterised by** including sections of relatively short sections of contact rail (41'a,41'b,41'c) including for an example ordinary breakers or electrical switches (10'b) in position on the said sections of track (41'a,41'b,41'c), in order to insulate the said sections from each other.

3. Supply system according one of the claim 1 or 2 **characterised by** the said means of electrical supply (10'a,10'a') is connected to sections (41'a,41'b,41'c) of the vehicle's contact rail whose length is at the most half the distance between two consecutive stations (N,N+1) serving passengers.

4. Supply system according one of the claims 1 to 3 **characterised by** the said means of electrical supply (10'a,10'a') includes a rectifier (10'g).

5. Supply system according one of the claim 1 **characterised by** including a means of a low voltage transformer connected to the household circuit.

6. Supply system according to claim 5, **characterised by** the voltage transformer being is sized according to the average power required for the electrical vehicle.

7. Supply system according one of the claims 1 to 4, **characterised by** the said first voltage transformer (81') of the installed means of supply (80') is removed and replaced by a rectifier, for example a rectifier bridge.

8. Supply system according to claim 4, **characterised by** the said first voltage transformer (81') of the installed means of supply (80') is of the direct current / direct current type.

9. Supply system according one of the claim 1, **characterised by** said installed supply system (80') of the vehicle includes a first voltage transformer (81') of the alternating current / direct current type.

10. Supply system whereby one of the preceding claims, **characterised by** the said electricity supply strips includes powered electrical conductor segments on the track of the electrical vehicle.

11. Supply system according to one of the claim 1 to 9 **characterised by** the said electrical supply strips are replaced by overhead lines (41") or electrical conductor studs (41") of the vehicle's supply.

12. Electric vehicle or electric transportation system, such as for example underground, trams, trolley, **characterised in that** it uses a power supply system as per one of the above claims.
